# EUROPEAN PATENT APPLICATION

(11) **EP 4 332 061 A1**
(43) Date of publication of application: **06.03.2024**
(21) Application number: 23181299.1
(22) Date of filing: 23.06.2023
(51) Int. Cl.: C01B 32/198

(54) **HIGHLY THERMALLY INSULATING AND ELECTRICALLY CONDUCTIVE GRAPHENE AEROGEL AND METHOD OF MANUFACTURING THEREOF**

(30) Priority: 30.08.2022 LU 502730
(71) Applicant: Fyzikální ústav AV CR, v. v. i., 18200 Praha 8 (CZ)
(72) Inventor: Silhavik, Martin, Praha (CZ); Prabhat, Kumar, Praha (CZ); Zafar, Zahid Ali, Praha (CZ); Cervenka, Jiri, Praha (CZ)
(74) Representative: Bauer, Karel

(57) **Abstract**

The present invention relates to a graphene aerogel, a method of manufacturing the same, and a method of increasing the electrical conductivity while decreasing the thermal conductivity thereof. The graphene aerogel according to the present invention is a porous carbon material that is mechanically stable, elastic, and has damping and non-flammable properties. The aerogel comprises two-dimensional carbon materials that are interconnected via covalent and van der Waals bonds to form a three-dimensional porous structure. The electrical conductivity is from 50 to 400 S/m, when the aerogel is compressed. Furthermore, the thermal conductivity of the graphene aerogel is from 10⁻³ to 10⁻¹ W m⁻¹K⁻¹, when the graphene aerogel is compressed to at least 5% of strain. The method of manufacturing is characterized in that, it comprises the steps of forming three-dimensional structures of the aerogel, wherein the three-dimensional structures comprise covalently cross-linked two-dimensional carbon materials, thereby forming a free-standing aerogel; and compressing of the free-standing aerogel to at least 5% of strain; and fixing the compression of the graphene aerogel.

## Description

### Technical field of the invention

The present invention, in a first aspect, relates to a carbon based material, more particularly to the graphene aerogel, which has low thermal conductivity, high electrical conductivity, damping, and flame-retardant or resistant properties. The second aspect of the present invention relates to a method of manufacturing thereof. In a further aspect, the present invention pertains to a particular use of the above-mentioned product, particularly the use as a thermal insulator, electrical conductor, damper, sensor, and non-flammable material.

### State of the art

Graphene aerogels are porous carbon based materials, alternatively known as graphene foam or 3D graphene. Graphene aerogels are known for their high porosity, low material density, high specific surface area and ability to conduct electric current. Graphene aerogels are also known for their elasticity and the ability to withstand multi-cyclic deformations. The above-mentioned properties thus predict graphene aerogels to be used in electronics, mechanical devices, and energy storage devices, such as batteries or (super)capacitors. The well-known method for the production of graphene aerogels comprises the step of: self-gelation of graphene oxide, hydrothermal formation followed by freeze drying, or supercritical drying, which enables three-dimensional (3D) pore structure formation. The electrical conductivity of the graphene aerogels prepared by these methods is relatively low, typically below 50 S/m, and the thermal conductivity is similar to the conductivity of air.

Common general knowledge represented by G. M. Vladimirovich, and V. P. Melnikov, "Graphene Oxide/Reduced Graphene Oxide Aerogels", in Graphene Oxide - Applications and Opportunities. London, United Kingdom: IntechOpen, 2018 [Online]. Available: https://www.intechopen.com/chapters/62496 doi: 10. 5772/intechopen. 78987 refers to a method of improving the electro-physical properties by the step of introducing a dopant element into the graphene aerogel. The dopant can be selected from the group of: nitrogen introduced into the system of organic amines, ammonia, amino acids, and other nitrogen-containing compounds, at the stage of hydrothermal treatment or graphite oxide aerogel with metallic nanoparticles, in particular noble metal salts and glucose. Such an improvement leads to an increase in the electrical conductivity from 100 S/m - 600 S/m at uniaxial compression strain from 60 - 80%.

The non-patent literature Highly Elastic and Conductive N-Doped Monolithic Graphene Aerogels for Multifunctional Applications In Kyu Moon, Seonno Yoon, Kyoung-Yong Chun, Jungwoo Oh First published: 27 October 2015 https://doi.org/10.1002/adfm.201502395 discloses a method of graphene aerogel manufacturing. The method comprises the steps: hydrothermal method employing hexamethylenetetramine as a stabilizer and nitrogen source. The graphene aerogel is subsequently subjected to freeze drying, thermal annealing, and uniaxial compression at 80 % of strain. The resulted product of the graphene aerogel contains 93.36 atomic % of carbon, 3 atomic % of oxygen, and 3.63 atomic % of nitrogen. The above-mentioned product prepared by the method appears to have an electrical conductivity of about 700 S/m. However, the above-mentioned document does not disclose any information relating to thermal conductivity.

CN 111974320A discloses a method of manufacturing high/ultra-high elasticity graphene aerogel materials. The method comprises the steps of: preparing a precursor foam from graphene oxide; hydrothermal reduction to obtain a graphene wet gel; directional freezing and freeze-drying to obtain a graphene aerogel; and thermal annealing to obtain a high temperature resistant elastic graphene aerogel. The final product of the aerogel contains silicon nanoparticles. In the step of graphene precursor preparation, the use of a reducing agent, surfactant and silica soil is disclosed. The resulted graphene aerogel is provided with the distribution of tens of micron-sized honeycomb-shaped micro-pores, and the pore size is 40-80 µm. The density of the high temperature-resistant elastic graphene aerogel is 20-60 mg/cm³, and the rebound rate can reach 100% under 30% strain compression. However, the document does not disclose any particular data on the electrical conductivity nor thermal conductivity of the final product.

CN111097341A discloses a method of manufacturing resin-reinforced three-dimensional graphene aerogel. The document discloses the steps of the method as follows: obtaining an aqueous precursor solution; hydrothermal reaction at 90 to 210 °C for 6 to 24 hours with subsequent washing and drying to obtain the phenolic resin reinforced three-dimensional graphene aerogel; wherein the step of drying can be freeze drying. The resulted product has an electrical conductivity of about tens of S/m. No particular data on thermal conductivity is provided.

Non-patent literature Yangsu Xie, Shen Xu, Zaoli Xu, Hongchao Wu, Cheng Deng, Xinwei Wang, Interface-mediated extremely low thermal conductivity of graphene aerogel, Carbon, Volume 98, 2016, Pages 381-390, ISSN 0008-6223, https://doi.org/10.1016/j.carbon.2015.11.033 discloses a graphene aerogel produced by a method comprising the steps: preparation of graphene oxide dispersed in water, heating in an oven at 95 °C for 6 h to transform a sample into hydrogel; freeze-drying for 48 h to completely remove the solvent inside the sample of graphene hydrogel; and microwave heating for 1-5 min to remove a large number of the residual functional groups. The resulted product was also subjected to a compressibility test to provide elasticity information. The real thermal conductivity of the resulted product ranges from 4.7×10⁻³ to 5.9×10⁻³ W m⁻¹ K⁻¹ depending on the temperature from 20-300 K. The non-patent literature further discloses electrical resistivity from 7×10⁻³ to 5.75×10⁻³ Ω m measured in the temperature range from 20-300 K. The electrical resistivity corresponds to the electrical conductivity in the range from about 140 to 173 S m⁻¹.

Non-patent literature Gongqing Tang, Zhi-Guo Jiang, Xiaofeng Li, Hao-Bin Zhang, Aravind Dasari, Zhong-Zhen Yu, Three dimensional graphene aerogels and their electrically conductive composites, Carbon, Volume 77, 2014, Pages 592-599, ISSN 0008-6223, https://doi.org/10.1016/j.carbon.2014.05.063 discloses 3D graphene network material, such as aerogel, having thermal conductivity 0.04 W m⁻¹K⁻¹ and electrical conductivity from 1.5 ×10⁻² to 1 S/m. The graphene aerogel was produced by the process comprising the steps: synthesis of graphene oxide from natural graphite; reduction in the presence of ammonia; dipping of graphene hydrogel in water for 48 h removing residual impurities; vacuum assisted fabrication at temperatures from 70 °C to 120 °C.

Non-patent literature Luojiang Zhang and Siu Wing Or, "Self-assembled three-dimensional macroscopic graphene/MXene-based hydrogel as electrode for supercapacitor", APL Materials 8, 091101 (2020) https://doi.org/10.1063/5.0015426 discloses graphene hydrogel having improved electro-chemical conductivity. The hydrogel is manufactured by steps comprising: reduction of graphene oxide; reduction of graphene oxide leading to improved conductivity; and applying hydrothermal process at temperature 180 °C for 6 h.

Non-patent literature Jiri Cervenka et al., Contact resistance based tactile sensor using covalently cross-linked graphene aerogels, Nanoscale, 2022, 14, 1440, DOI: 10.1039/d1nr06893h discloses a method of manufacturing 3D porous graphene materials, i.e. graphene aerogels. The method comprises the steps: hydrothermal synthesis followed by freeze-drying and thermal annealing. The product produced by the process increases electrical conductivity due to uniaxial tensile strain. The measured intrinsic electrical resistivity of the product is about 0.02 Ω·m, which corresponds to the electrical conductivity of about 50 S/m. However, no direct information on thermal conductivity is disclosed.

EP 2 888 202 B1 discloses graphene aerogel and a method of manufacturing thereof. The method comprises the steps: synthesis of graphene monolith and providing graphene oxide; partial reduction of the graphene oxide; immersing the graphene oxide into a dry bath to freeze it; freezing; boiling the graphene oxide to obtain gel; freeze-drying and thermal annealing at 200 °C for 2 h. The resulted product was also subject to compression to 80% strain. The resulted product has improved inherent electrical conductivity. However, no indication of the thermal conductivity is provided. Shown data provides the electrical conductivity of the product in the range 1-10 S/m.

Non-patent literature Synthesis and Characterization of Highly Crystalline Graphene Aerogels Marcus A. Worsley, Thang T. Pham, Aiming Yan, Swanee J. Shin, Jonathan R. I. Lee, Michael Bagge-Hansen, William Mickelson, and Alex Zettl ACS Nano 2014 8 (10), 11013-11022 DOI: 10.1021/nn505335u discloses graphene oxide based aerogel and a method of manufacturing thereof. The method of manufacturing comprises the steps: CVD-grown graphene layer and high-temperature annealing. The resulted product is sensitive to heat treatment. Reported electrical conductivity is up to 10⁴ S/m, however, there is no indication of the thermal conductivity.

A further non-patent literature Cheng, Y., Zhou, S., Hu, P. et al. Enhanced mechanical, thermal, and electric properties of graphene aerogels via supercritical ethanol drying and high-temperature thermal reduction. Sci Rep 7, 1439 (2017). https://doi.org/10.1038/s41598-017-01601-x discloses graphene aerogel and a method of manufacturing thereof. The method of manufacturing as disclosed provides two alternatives. The first alternative comprises the steps of the synthesis of graphene aerogel; hydrothermal reduction; and drying using supercritical ethanol to obtain graphene aerogel. The resulted product was subject to a compressive stress-strain experiment and is reported to have electrical conductivity in the range of 14.4-53.7 S/m and thermal conductivity in the range of 0.0281-0.0390 W·m⁻¹·K⁻¹. After annealing at 1500 °C, the thermal conductivity was slightly increased. The second alternative method of production discloses freeze-drying as an alternative to ethanol drying. However, no particular data on the electrical conductivity nor thermal conductivity of the particular product is provided.

Further non-patent literature *Šilhavík, M., Kumar, P., Zafar, Z.A. et al. Anomalous elasticity and damping in covalently cross-linked graphene aerogels. Common Phys **5**, 27 (2022).* *https:*//*doi.org*/*10.1038*/*s42005-022-00806-5* discloses graphene aerogel manufactured by a method comprising the steps: hydrothermal synthesis from a graphene oxide powder; freeze-drying; high-temperature annealing at a temperature of 1300 °C for 30 min in vacuum. The resulted product was subjected to mechanical deformation under compressive and tensile strain with respect to electrical conductivity. The conductivity changes by two orders of magnitude over the whole measured strain range, enabling detection of the mechanical strain of all biological materials. No particular data on temperature conductivity is provided.

However, some industrial applications, such as heating systems, reactors, electrical devices, and batteries, require thermal insulation in combination with high electrical conductivity, mechanical vibration damping, and non-flammability. The present invention provides a solution to this problem by using a manufacturing method of a suitable carbon-based material that can serve as a thermal insulator, electrical conductor, mechanical damper, and non-flammable material at the same time.

### Summary of the invention

In a first aspect of the present invention, a graphene aerogel, as defined by claim 1, is provided.

The graphene aerogel according to the present invention is a porous carbon material that is derived from state-of-the-art graphene aerogels. The graphene aerogel, according to the present invention, exhibits large surface areas and large pore volume. The graphene aerogel comprises two-dimensional (2D) carbon material domains or particles, which are bound together in a 3D porous structure. The 2D carbon materials are composed of thin carbon layers with sheet-like structure with a high aspect ratio that have typical lateral dimensions of the range of 50-10000 nm and thickness distribution ranging from a single atomic layer to 15 nm. A particular advantage of the invention is that atomic or molecular bonds (covalent and noncovalent, e.g., van der Waals) interconnect the two-dimensional carbon materials in the graphene aerogel, which enable reversible elastic mechanical deformation of the graphene aerogels. The 2D carbon domains or particles are thus strongly bonded together not only "in-plane", but also bounded to each other in the third dimension in the graphene aerogel, creating a cross-linked carbon network.

The graphene aerogel according to the present invention is further mechanically stable, and elastic, exhibits electrical conductivity from 50 to 400 S/m; and at the same time thermal conductivity from 10⁻³ to 10⁻¹ W·m⁻¹K⁻¹; when the compression set from about 5% of strain up to the elastic strain limit.

The porous structure can be a cellular structure of the graphene aerogel, which comprises solid and void networks, where the porous structure is open or closed. In accordance with the present invention the graphene aerogel has an open cellular structure in the non-compressed state. If the graphene aerogel is compressed, the open cellular structure transforms into a more closed cellular structure.

2D carbon material can be graphene, graphene oxide, reduced graphene oxide, hydrogenated graphene, nitrogen-doped graphene, boron-doped graphene, metal-doped graphene, few-layer graphene, graphene nanosheets, amorphous graphene and polymers.

In a preferred embodiment, as defined by claim 2, the mass density of the aerogel is from about 5 mg/cm³ to about 40 mg/cm³ in a compressed state, more preferably from about 5 mg/cm³ to about 12 mg/cm³ in a non-compressed state.

A further preferred embodiment is defined by claim 3. The pores can be ordered and/or randomly ordered and/or open and/or closed.

A further preferred embodiment is defined by claim 4. Metal and/or oxides and/or polymer and/or dopant can be comprised in the graphene aerogel in the form of incorporated atoms, molecules, or nanoparticles in a free-standing bulk, layers, and or composite materials.

A further preferred embodiment is defined by claim 5. The damping time of the millimetre-sized aerogel is within 1 - 500 ns in the non-compressed state.

A further preferred embodiment is defined by claim 6. The aerogel, in its preferred embodiment, is flame resistant up to 1500 °C.

A further preferred embodiment is defined by claim 6. The burning rate of the aerogel is preferably below 6×10¹⁵ atoms/s at a temperature below 1500 °C, more preferably below 4×10¹⁵ atoms/s at a temperature below 1200 °C, even more preferably below 2×10¹⁵ atoms/s at a temperature below 800 °C.

A further preferred embodiment is defined by claim 7. Ampacity is preferably from 0.2-1 A within the temperature range of 300 - 360 K at compression set to at least 5% of strain.

In another aspect of the present invention, a method of manufacturing the graphene aerogel is provided. The method is defined in claim 8.

The method according to the present invention allows template-free synthesis, which is cheap and allows the controlling of the density of the graphene aerogel via the concentration of graphene oxide in the suspension. The pore size can be affected by the temperature of freeze-drying.

In a preferred embodiment, the step of forming a three-dimensional structure comprises thermal annealing through a heated base or jacket on which the graphene aerogel is positioned or surrounded, respectively.

The graphene aerogel can be used as a thermal insulator and electrical conductor at the same time; or as a sensor; or as a damper; or as a flame retardant material up to 1500 °C.

### Brief Description of Drawings

Fig. 1 represents a schematic drawing of the internal structure of (A) uncompressed and (B) compressed graphene aerogels according to state of the art and according to the present invention, respectively.
Fig. 2 represents SEM micrographs of a graphene aerogel at 0% (left) and 60% (right) uniaxial compressive strain (applied down from the top).
Fig. 3 represents the thermal conductivity of a graphene aerogel depending on temperature.
Fig. 4 represents the electrical conductivity of a graphene aerogel depending on temperature.
Fig. 5 represents the thermal conductivity of graphene aerogels depending on the compression of several embodiments of the graphene aerogel with different densities.
Fig. 6 represents the electrical conductivity of graphene aerogels depending on compression and density.
Fig. 7 represents the thermal conductivity of graphene aerogels depending on density.
Fig. 8 represents the electrical conductivity of graphene aerogels depending on density.
Fig. 9 represents the temperature dependency of the ampacity of a graphene aerogel before and after compression at 70% of strain.
Fig. 10 represents three photographs of a graphene aerogel before, during, and after exposure to a propane flame.
Fig. 11 represents the burning rate dependency of graphene aerogels as a function of the flame temperature.

### Detailed description

According to the present invention, a graphene aerogel suitable to serve as a thermal insulator, electric conductor, damper, and non-flammable material is provided. Such a material can be in particular used in space and electronics applications, or as a sensor, damper, or flame-resistant/retardant material. A further aspect of the present invention is a method of manufacturing the graphene aerogel according to the present invention.

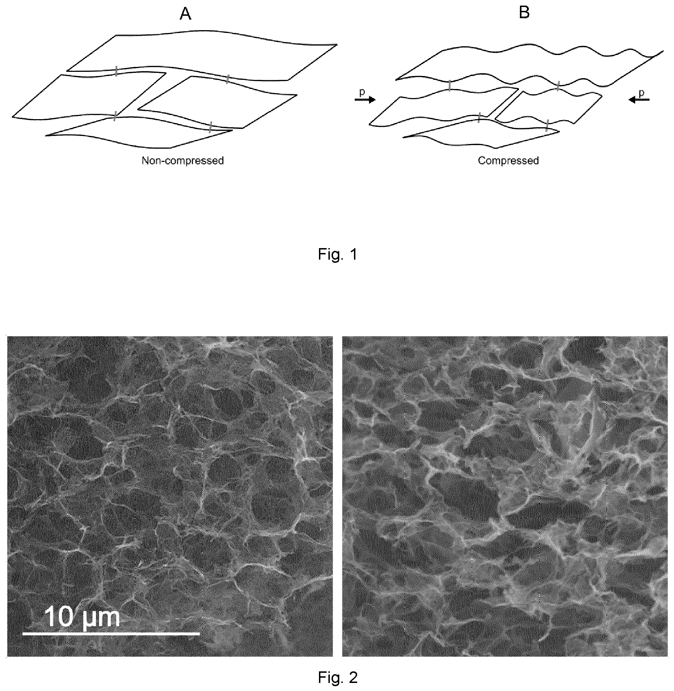

**Fig. 1** shows two embodiments. Embodiment A represents 2D carbon materials bonded to each other according to state of the art. The bond between the two materials is provided by the van der Waals interaction, covalent bonds, or a combination thereof. Such bonded 2D carbon materials form a three-dimensional cellular or porous structure, which macroscopically can result in an aerogel. On the other hand, in accordance with the present invention as shown in embodiment B, under mechanical compression covalent bonds between 2D carbon materials elastically withstand mechanical deformation, resulting in reversible elastic deformation of the material. This modifies the interaction between the 2D materials in the compressed graphene aerogel in such a way that the 2D carbon materials overlap more, yet they are further away from each other but still in direct electrical contact. This leads to an increase in the electrical conductivity but a decrease in the thermal conductivity in the graphene aerogel under compression.

Carbon 2D materials can be substantially graphene oxides bonded by a covalent bond to each other. The average size of the carbon 2D materials can vary, for example, from about 0.3 nm to about 10000 nm. The nanoparticles comprised in the graphene aerogel preferably have substantially the same size. In an example of the present invention, the source material of the graphene aerogel was a graphene oxide powder, which was converted into a porous 3D graphene hydrogel using hydrothermal synthesis. Then the graphene hydrogel was freeze-dried to produce an aerogel therefrom. Crystallinity and electrical conductivity of the aerogels were improved in high-temperature annealing, with a temperature higher than 1300 °C in a vacuum. High-temperature annealing removes oxygen and defects from the material and makes it covalently cross-linked by C-C bonds. The effect of the covalently cross-linked C-C bonds has been achieved by thermal annealing of the graphene aerogel through a base on which the graphene hydrogel is positioned. After that, the graphene aerogel was subjected to compression set to 5%-80% of strain, and the compressive strain was fixed.

The resulted product, under SEM, is shown in **Fig. 2**. The left part shows the graphene aerogel in the free non-compressed state, i.e. 0% of strain. The right side shows the internal structure under uniaxial compression at 60% of strain, where deformation and flattening of pores are visualized. The compressed graphene aerogel keeps its cellular nature of the 3D structure, but the material density is decreased.

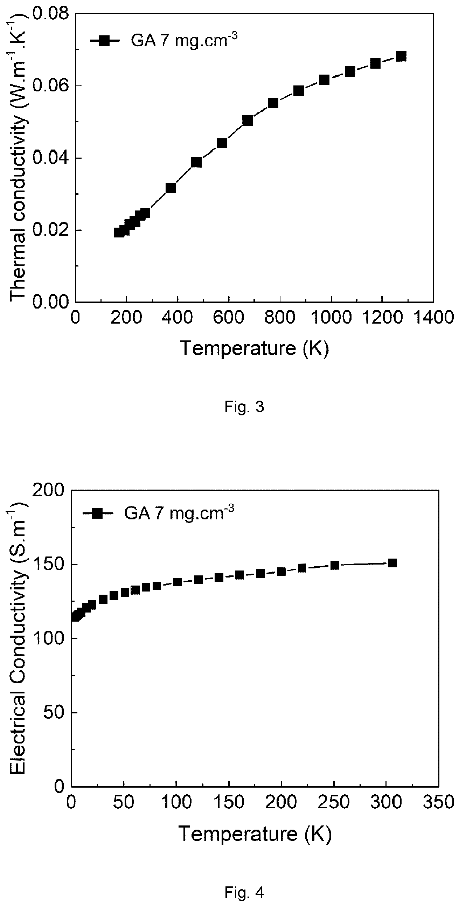

**Fig. 3** shows a temperature dependency of the thermal conductivity of a graphene aerogel as described above in uncompressed, i.e. 0% of strain. The electrical conductivity of the same graphene aerogels as a function of temperature is shown in **Fig. 4**. The skilled person deduces that both thermal and electrical conductivity increases with increasing temperature.

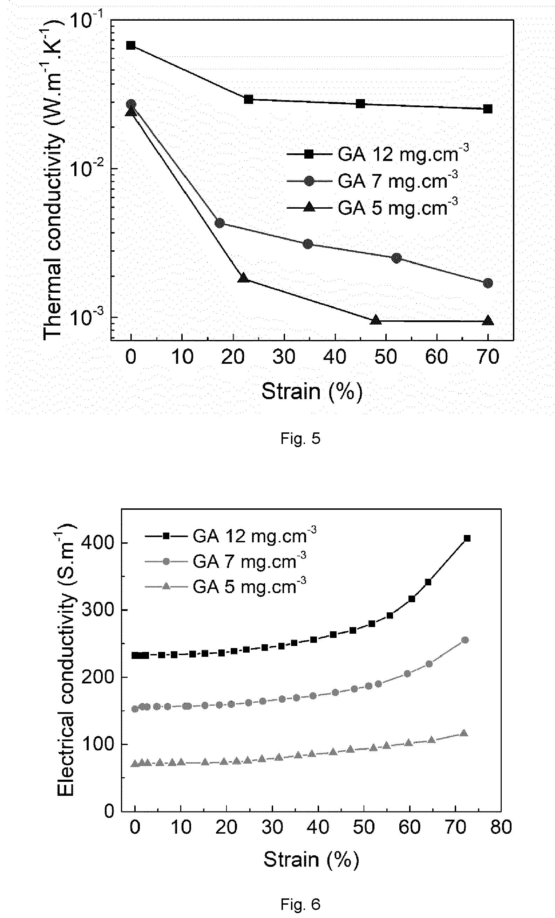

**Fig. 5** shows a graph of thermal conductivity dependency of a graphene aerogel on compressive strain expressed in a fractional decrease in length of an object (ε = Δℓ/ℓ₀), where ε is the compressive strain fraction; Δℓ is the amount of height change after compression; and ℓ₀ is the original height of the graphene aerogel. Three graphene aerogel examples with different mass densities have been tested that demonstrated decreasing thermal conductivity with increasing compressive strain. The skilled person may also find that the thermal conductivity decreases with the decreasing mass density. It is observed that thermal conductivity can be decreased by applying compressive strain from the initial value of 10⁻¹ W m⁻¹K⁻¹ to 10⁻²-10⁻³ W m⁻¹K⁻¹ when the compression is set to 10-70% of strain. In one particular example of the aerogel in the range of mass density from about 5 mg/cm³ to about 12 mg/cm³, the thermal conductivity is decreased by more than 3 times at more than 40% of compressive strain. In this case, the graphene aerogel with a mass density of less than 10 mg/cm³ demonstrates a decrease of the thermal conductivity by more than 1 order of magnitude from about 10⁻² Wm⁻¹K⁻¹ to about 10⁻³ Wm⁻¹K⁻¹ after compression.

**Fig. 6** shows a graph of electrical conductivity dependency of the same graphene aerogels under compressive strain as shown in Fig. 5. The electrical conductivity increases with increasing compressive strain. In particular, the skilled person may find a surprising increase in the electrical conductivity in the range above 40% of the compressive strain. The electrical conductivity ranges from about 50 S/m to about 400 S/m. The particular technical effect of increasing the electrical conductivity by applying compressive strain can be found both in graphene aerogels with high and low mass density, but the effect is more pronounced in the higher-density graphene aerogel.

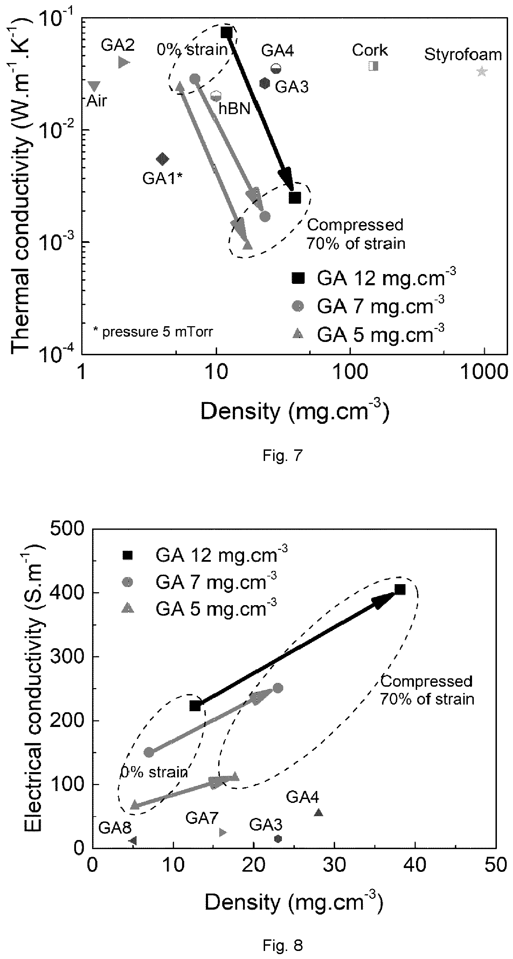

**Fig. 7** shows a representative scheme of decreasing the thermal conductivity of graphene aerogels as a function of compressive strain and mass density according to the present invention and in particular examples above. The dashed circular area represents the range of thermal conductivity of the graphene aerogels before (0% strain) and after applying the compressive strain of 70%; and its comparison with the state-of-the-art materials, in particular tabulated values of air, cork, Styrofoam, hexagonal boron nitride aerogel; or graphene aerogel reported in non-patent literature, in particular GA1 - Yangsu Xie, Shen Xu, Zaoli Xu, Hongchao Wu, Cheng Deng, Xinwei Wang, Interface-mediated extremely low thermal conductivity of graphene aerogel, Carbon, Volume 98, 2016, Pages 381-390, ISSN 0008-6223, https://doi.org/10.1016/j.carbon.2015.11.033., GA2 Gongqing Tang, Zhi-Guo Jiang, Xiaofeng Li, Hao-Bin Zhang, Aravind Dasari, Zhong-Zhen Yu, Three dimensional graphene aerogels and their electrically conductive composites, Carbon, Volume 77, 2014, Pages 592-599, ISSN 0008-6223, https://doi.org/10.1016/j.carbon.2014.05.063., GA3 (not annealed) GA4 (annealed) Cheng, Y., Zhou, S., Hu, P. et al. Enhanced mechanical, thermal, and electric properties of graphene aerogels via supercritical ethanol drying and high-temperature thermal reduction. Sci Rep 7, 1439 (2017). https://doi.org/10.1038/s41598-017-01601-x.

**Fig. 8** further shows a graph representing the electrical conductivity of graphene aerogels as a function of compressive strain and mass density and a comparative study with respect to the tabulated values of metals, and graphene aerogels reported in non-patent literature, in particular: GA3 and GA4 as reported above; and GA7 Qiu, Ling, Jeffery Z. Liu, Shery L.Y. Chang, Yanzhe Wu a Dan Li, Biomimetic superelastic graphene-based cellular monoliths, Nature Communications, Volume 3, 2012, ISSN 2041-1723, https://doi.org/10.1038/ncomms2251 and GA8 Worsley, Marcus A., Tammy Y. Olson, Jonathan R. I. Lee, et al. High surface area, sp 2 -cross-linked three-dimensional graphene monoliths. The Journal of Physical Chemistry Letters, Volume 2, 2011, Pages 921-925, ISSN 1948-7185, https://doi.org/10.1021/jz200223x. The skilled person may find that the electrical conductivity has been increased by at least two times in the compressed graphene aerogels.

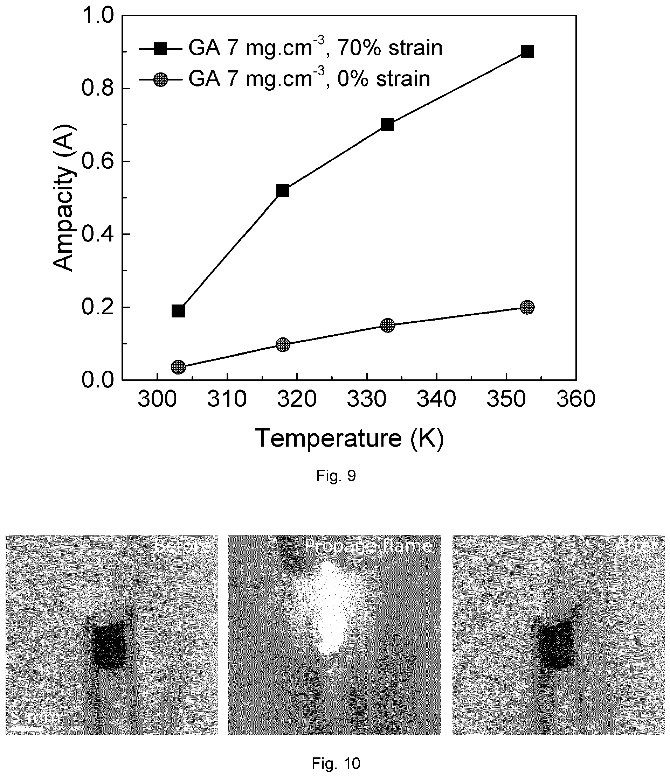

**Fig. 9** shows the measured ampacity of a graphene aerogel before compression at 0% strain and after compression set to 70% of strain. It has been observed that the ampacity increased with the increasing temperature of the aerogel. The skilled person may find that the ampacity has been increased by at least two times in the compressed graphene aerogel.

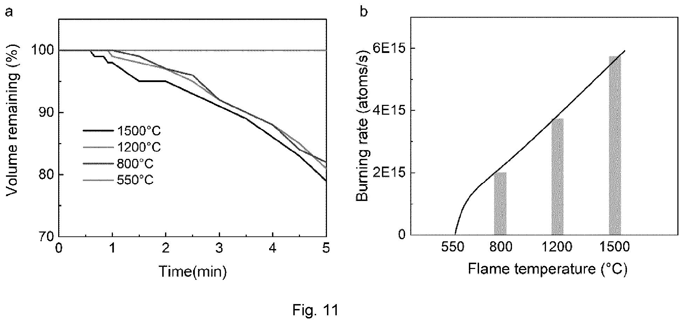

**Fig. 10** shows the flame resistance of a graphene aerogel according to the present invention after being exposed to a propane flame. The propane flame reached the temperature at the surface of the aerogel in the range of 550-1500 °C. It has been observed, as shown in **Fig. 11**, that the graphene aerogel can resist flame at least up to the temperature of 1500 °C, wherein the burning rate is below 6×10¹⁵ atoms/s.

Graphene aerogel can be in various forms, for example, monoliths, composites, thin films, granules, and powders. In one embodiment, the graphene aerogel can further comprise other elements, such as nitrogen, boron, oxygen, and hydrogen, metals, oxides, such as iron oxide nanoparticles, or polymers, such as graphene-polyimide-based carbon nanoparticles.

## Claims

1. A graphene aerogel comprising 2D carbon materials, wherein
- 2D carbon materials are linked by bonds allowing elastic compression and forming a porous structure; and wherein
- the graphene aerogel is mechanically stable, and elastic; and wherein
- electrical conductivity of the graphene aerogel is from 50 to 400 S/m, when the aerogel is compressed; and wherein **characterized in that**
- thermal conductivity of the graphene aerogel is from 10⁻³-10⁻¹ W m⁻¹K⁻¹, when the aerogel is compressed, wherein the compression strain is at least 5%; and **in that**
- the links are cross-linked bonds between the 2D carbon materials that are elastically deformable under compression and capable of both, increasing the electrical conductivity and decreasing the thermal conductivity of the aerogel, simultaneously.

2. The graphene aerogel according to claim 1 **characterized in that** mass density of the aerogel is from about 5 mg/cm³ to about 12 mg/cm³ in a non-compressed state.

3. The graphene aerogel according to claim 1 or 2 **characterized in that** the pores are randomly ordered, or ordered, and/or open and/or closed.

4. The graphene aerogel according to anyone of the previous claims **characterized in that** the aerogel further comprises, metals, oxides, polymers, or dopants.

5. The graphene aerogel according to anyone of the previous claims **characterized in that** the aerogel damps mechanical vibrations within the damping time of 1-500 ns in the non-compressed state.

6. The graphene aerogel according to anyone of the previous claims **characterized in that** the aerogel is flame resistant or flame retardant in the temperature range from 550 °C to 1500 °C, and wherein a burning rate of the aerogel is below 6×10¹⁵ atoms/s.

7. The graphene aerogel according to anyone of the previous claims **characterized in that** ampacity of the aerogel is from 0.2-1.0 A within the temperature range of 300-360 K under compression strain of 0-80%.

8. A method of manufacturing a graphene aerogel from graphene oxide according to anyone of the claims 1 - 7, the method comprising steps:
- providing graphene oxide suspension;
- reducing the graphene oxide suspension by hydrothermal synthesis;
- freeze-drying of the reduced graphene oxide suspension, thereby converting it into graphene aerogel;
- temperature annealing of the graphene hydrogel at a temperature of at least 1000 K,
- compressing of the graphene aerogel **characterized in that** the method further comprising the steps:
- forming three-dimensional structures of the aerogel, wherein the three-dimensional structures comprise cross-linking the two-dimensional carbon materials, thereby forming a free-standing aerogel; and
- compressing of the free-standing aerogel to at least 5% strain; and
- fixing the compression of the graphene aerogel.

9. The method according to claim 8 **characterized in that** the step of forming a three-dimensional structure comprises thermal annealing through a base or jacket on which the graphene hydrogel is positioned or surrounded.

10. The method according to claim 8 or 9, wherein the uniaxial or biaxial or triaxial compressing is from 60% to 80% strain.

11. Use of the graphene aerogel according to anyone of the claims 1 - 7 as a thermal insulator and an electric conductor.

12. Use of the graphene aerogel according to anyone of the claims 1 - 7 as a sensor.

13. Use of the graphene aerogel according to anyone of the claims 1 - 7 as a damper.

14. Use of the graphene aerogel according to anyone of the claims 6 as a non-flammable material up to 1500 °C.
